# EUROPÄISCHE PATENTSCHRIFT

(11) **EP 3 661 788 B1**
(45) Veröffentlichungstag und Bekanntmachung des Hinweises auf die Patenterteilung: **28.12.2022**
(21) Anmeldenummer: 18750139.0
(22) Anmeldetag: 31.07.2018
(51) Int. Cl.: B60K 6/48, B60K 6/365, B60K 6/547, F16H 3/72

(54) **GETRIEBE FÜR EINE HYBRIDANTRIEBSANORDNUNG, HYBRIDANTRIEBSANORDNUNG UND FAHRZEUG**
RANSMISSION FOR A HYBRID DRIVE ARRANGEMENT, HYBRID DRIVE ARRANGEMENT AND VEHICLE
BOÎTE DE VITESSES POUR UN SYSTÈME DE PROPULSION HYBRIDE, SYSTÈME DE PROPULSION HYBRIDE ET VÉHICULE

(30) Priorität: 02.08.2017 DE 102017213344
(43) Veröffentlichungstag der Anmeldung: 10.06.2020
(73) Patentinhaber: Robert Bosch GmbH, 70442 Stuttgart (DE)
(72) Erfinder: HUBER, Thomas, 74915 Daisbach (DE); ESZTERLE, Dominik, 74078 Heilbronn (DE); SMEJKAL, Tom, 01069 Dresden (DE); WIRTH, Christian, 85452 Eichenried (DE); DEMPEL, Rolf Lucius, 74354 Besigheim (DE); BRUMMER, Simon, 82194 Gröbenzell (DE)
(86) Internationale Anmeldenummer: PCT/EP2018/070678
(87) Internationale Veröffentlichungsnummer: WO 2019/025411

(56) Entgegenhaltungen:
- EP-A1- 3 072 724
- FR-A1- 3 026 062
- GB-A- 995 233
- JP-A- 2006 183 760

## Beschreibung

Die Erfindung betrifft ein Getriebe für eine Hybridantriebsanordnung. Ferner betrifft die Erfindung eine Hybridantriebsanordnung mit einem Getriebe, ein Fahrzeug mit einer Hybridantriebsanordnung.

### Stand der Technik

Getriebe für Hybridantriebsanordnungen sind aus dem Stand der Technik bekannt. Beispielsweise zeigt die WO2010/009943 A1 ein Doppelkupplungsgetriebe, welches den Betrieb eines Hybridfahrzeugs verbrennungsmotorisch, elektromotorisch und mit beiden Antriebsaggregaten zusammen ermöglicht. Derartige Getriebe sind komplex, schwer und teuer. Es besteht Bedarf an Getriebetopologien mit reduzierter mechanischer Komplexität, verringertem Raumbedarf und verringertem Gewicht.

Der Begriff "gekoppelt" bzw. "angekoppelt" wird im Folgenden im Sinne einer festen Verbindung benutzt. Im Gegensatz dazu umfasst der Begriff "koppelbar" im Rahmen der vorliegenden Beschreibung sowohl feste als auch schaltbare Verbindungen. Ist konkret eine schaltbare Verbindung gemeint, wird in der Regel das entsprechende Schaltelement, insbesondere eine Bremse oder eine Kupplung, explizit angegeben. Ist hingegen konkret eine feste, starre oder drehfeste Verbindung gemeint, wird in der Regel der Begriff "gekoppelt" bzw. "angekoppelt" verwendet und auf die Verwendung des Begriffs "koppelbar" verzichtet. Die Verwendung des Begriffs "koppelbar" ohne Angabe eines konkreten Schaltelementes deutet somit auf den beabsichtigten Einschluss beider Fälle hin. Diese Unterscheidung erfolgt allein zugunsten der besseren Verständlichkeit und insbesondere zur Verdeutlichung, wo das Vorsehen einer schaltbaren Verbindung anstelle einer in der Regel leichter realisierbaren festen Verbindung beziehungsweise Koppelung zwingend erforderlich ist. Die obige Definition des Begriffs "gekoppelt" bzw. "angekoppelt" ist daher keinesfalls so eng auszulegen, dass willkürlich zu Umgehungszwecken eingefügte Kupplungen aus seinem Wortsinn herausführten.

Aus der FR 3 026 062 A1 ist ein Getriebe für eine Hybridantriebsanordnung bekannt.

Aus der JP 2006 183760 A ist ein weiteres Getriebe für eine Hybridantriebsanordnung bekannt.

Aus der GB 995 233 A ist ein weiteres Getriebe für ein Kraftfahrzeug bekannt.

### Offenbarung der Erfindung

Es wird ein Getriebe für eine Hybridantriebsanordnung bereitgestellt, welches mit zwei Antriebsaggregaten koppelbar ist, mit einer Eingangswelle und einer Ausgangswelle, mindestens einem ersten, zweiten und einem dritten Schaltelement, und mindestens einem doppelten Planetengetriebe, insbesondere einem Ravigneaux Satz, mit einem ersten und einem zweiten Sonnenrad, einem Planetenträger und einem Hohlrad,
wobei die Eingangswelle mittels dem ersten Schaltelement koppelbar ist mit dem Planetenträger des doppelten Planetengetriebes und die Eingangswelle mittels dem zweiten Schaltelement koppelbar ist mit dem Hohlrad des doppelten Planetengetriebes, und die Eingangswelle mittels des dritten Schaltelementes koppelbar ist mit dem ersten Sonnenrad des doppelten Planetengetriebes
und die Ausgangswelle mit dem Planetenträger des doppelten Planetengetriebes gekoppelt ist.

Es wird ein Getriebe für eine Hybridantriebsanordnung bereitgestellt. Für den Betrieb der Hybridantriebsanordnung sind zwei Antriebsaggregate an das Getriebe koppelbar. Das Getriebe umfasst eine Eingangswelle und eine Ausgangswelle, mindestens ein erstes, zweites und ein drittes Schaltelement und mindestens ein doppeltes Planetengetriebe, insbesondere einem Ravigneaux-Satz. Das doppelte Planetengetriebe umfasst ein erstes und ein zweites Sonnenrad, einen, insbesondere gemeinsamen, Planetenträger und ein Hohlrad. Insbesondere umfasst das doppelte Planetengetriebe erste Planeten, die das erste Sonnenrad umkreisen und mit dem ersten Sonnenrad und mit dem Hohlrad kämmen. Insbesondere zweite Planeten umkreisen und kämmen mit dem zweiten Sonnenrad und kämmen mit den ersten Planeten. Insbesondere fixiert der Planetenträger die Abstände der ersten und zweiten Planeten zueinander sowie jeweils untereinander. Die Ausgangswelle ist mit dem Planetenträger des doppelten Planetengetriebes gekoppelt. Im Rahmen der Beschreibung ist eine Koppelung als eine Verbindung zu verstehen, welche starr, beispielsweise einstückig, beispielsweise mittels einer Welle, oder mit einer festen Übersetzung oder Getriebestufe ausgeführt ist. Die Eingangswelle ist mittels dem ersten Schaltelement koppelbar mit dem Planetenträger des doppelten Planetengetriebes. Weiter ist die Eingangswelle mittels dem zweiten Schaltelement koppelbar mit dem Hohlrad des doppelten Planetengetriebes. Weiter ist die Eingangswelle mittels des dritten Schaltelementes koppelbar mit dem ersten Sonnenrad des doppelten Planetengetriebes. Insbesondere ist die Ausgangswelle mit einem Abtrieb koppelbar. Ein Abtrieb ist insbesondere mindestens eine Welle oder eine Achse, die die Bewegung der Ausgangswelle auf den mechanischen Antriebsstrang eines Fahrzeugs, beispielsweise auf ein Differenzial oder auf ein Antriebsrad überträgt. Vorteilhaft wird ein Getriebe bereitgestellt, welches die Drehzahl und das Drehmoment, welches an der Eingangswelle anliegt, bei geschlossenem erstem und geöffneten zweitem und dritten Schaltelement entsprechend der Übersetzungsverhältnisse in dem Getriebe auf die Ausgangswelle überträgt. Bei geöffneten ersten Schaltelement ist die Eingangswelle von der Ausgangswelle abgekoppelt.

In einer anderen Ausgestaltung der Erfindung umfasst das Getriebe ein viertes Schaltelement, welches dazu eingerichtet ist, das Hohlrad des doppelten Planetengetriebes abzubremsen oder freizugeben.

Für das Getriebe ist ein viertes Schaltelement vorgesehen, welches ein Freigeben oder Bremsen des Hohlrades des doppelten Planetengetriebes ermöglicht, insbesondere ein Verbinden des Hohlrades des doppelten Planetengetriebes oder ein Abstützen des Hohlrades des doppelten Planetengetriebes an einem Fixpunkt oder an einem Gehäuse des Getriebes. Das Abbremsen des Hohlrades des doppelten Planetengetriebes umfasst das Reduzieren der Drehzahl des Hohlrades, insbesondere bis zum Stillstand des Hohlrades. Das Freigeben des Hohlrades umfasst das Lösen der Bremse, so dass das Hohlrad entsprechend der auf das Hohlrad wirkenden Kräfte beschleunigt. Vorteilhaft lassen sich mit der bisher beschriebenen Topologie des Getriebes mit den ersten bis vierten Schaltelementen, neben den bereits erwähnten, weitere Betriebsmodi einstellen. So ergibt sich bei geschlossenem viertem und drittem und geöffnetem erstem und zweitem Schaltelement das höchste mit diesem Getriebe erzielbare Übersetzungsverhältnis zwischen der Eingangswelle und Ausgangswelle.

In einer anderen Ausgestaltung der Erfindung umfasst das Getriebe ein fünftes Schaltelement, welches dazu eingerichtet ist, das zweite Sonnenrad des doppelten Planetengetriebes abzubremsen oder freizugeben.

Für das Getriebe ist ein fünftes Schaltelement vorgesehen, welches ein Freigeben oder Bremsen des zweiten Sonnenrades des doppelten Planetengetriebes ermöglicht, insbesondere ein Verbinden des zweiten Sonnenrades des doppelten Planetengetriebes oder ein Abstützen des zweiten Sonnenrades des doppelten Planetengetriebes an einem Fixpunkt oder an einem Gehäuse des Getriebes. Das Abbremsen des zweiten Sonnenrades des doppelten Planetengetriebes umfasst das Reduzieren der Drehzahl des zweiten Sonnenrades des doppelten Planetengetriebes, insbesondere bis zum Stillstand des zweiten Sonnenrades des doppelten Planetengetriebes. Das Freigeben des zweiten Sonnenrades des doppelten Planetengetriebes umfasst das Lösen der Bremse, so dass das zweite Sonnenrades des doppelten Planetengetriebes entsprechend der auf das zweite Sonnenrad des doppelten Planetengetriebes wirkenden Kräfte beschleunigt. Vorteilhaft lassen sich mit der bisher beschriebenen Topologie des Getriebes mit dem ersten bis fünften Schaltelementen, neben den bereits erwähnten, weitere Betriebsmodi einstellen. So ergibt sich bei geschlossenem fünftem und drittem oder zweitem Schaltelement insbesondere ein zweithöchstes oder ein niedrigstes mit diesem Getriebe erzielbares Übersetzungsverhältnis zwischen Eingangswelle und Ausgangswelle.

In einer weiteren Ausgestaltung der Erfindung umfasst das erste Schaltelement eine Kupplung.

Zur Verbindung der Eingangswelle mit dem Planetenträger des doppelten Planetengetriebes ist das erste Schaltelement als Kupplung ausgeführt. Bei einer derartigen Kupplung kann es sich insbesondere um eine Trockenkupplung, Nasskupplung oder Klauenkupplung handeln. Vorteilhaft werden Möglichkeiten für eine steuerbare Verbindung der Eingangswelle mit dem Planetenträger bereitgestellt.

In einer anderen Ausgestaltung der Erfindung umfasst das zweite und/ oder drittte Schaltelement eine Klauenkupplung.

Das zweite und/ oder dritte Schaltelement ist als Klauenkupplung ausgeführt. Das zweite und dritte Schaltelement sind entweder geöffnet oder wechselseitig geschlossen, also niemals gleichzeitig geschlossen. Daher können diese beiden Schaltelemente vorteilhaft mittels eines Aktuators und einer Schaltgabel oder Schaltschwinge angesteuert werden. Der Aktuator steuert hierzu insbesondere drei Positionen an: zweites Schaltelement geschlossen; beide Schaltelemente geöffnet; drittes Schaltelement geschlossen. Vorteilhaft wird eine Möglichkeit zur steuerbaren Kopplung der Eingangswelle mit den Komponenten des doppelten Planetengetriebes bereitgestellt.

In einer anderen Ausgestaltung der Erfindung umfasst das vierte und/ oder das fünfte Schaltelement eine Bremse.

Das vierte und/ oder fünfte Schaltelement ist als Bremse, insbesondere eine Trocken- oder Nassbremse oder als Klauenkupplung welche insbesondere als Bremse ausgeführt ist, ausgeführt. Vorteilhaft wird eine Möglichkeit zur steuerbaren Freigabe und Abbremsung der Komponenten des doppelten Planetengetriebes bereitgestellt.

In einer anderen Ausgestaltung der Erfindung ist ein erstes Antriebsaggregat, insbesondere eine Verbrennungskraftmaschine, mit der Eingangswelle koppelbar und/ oder ein zweites Antriebsaggregat, insbesondere eine elektrische Maschine, ist mit dem ersten Sonnenrad des doppelten Planetengetriebes koppelbar.

An der Eingangswelle ist eingangsseitig das erste Antriebsaggregat ankoppelbar. Das zweite Antriebsaggregat ist mit dem ersten Sonnenrad des doppelten Planetengetriebes koppelbar. Vorteilhaft kann für einen generatorischen Betrieb des zweiten Antriebsaggregates, beispielsweise einer elektrischen Maschine, beispielsweise zum Laden einer Batterie, das erste Antriebsaggregat oder der Verbrennungsmotor mittels Schließen des dritten Schaltelements und Öffnen des ersten, zweiten und vierten und fünften Schaltelements mit der elektrischen Maschine verbunden werden. Da dabei beide Antriebsaggregate von der Ausgangswelle abgekoppelt sind und somit kein Drehmoment auf die Ausgangswelle übertragen wird, kann dieses Laden bei beispielsweise stillstehender Ausgangswelle, also beispielsweise während des Stillstands eines Fahrzeugs, erfolgen (Standladen). Bei beispielsweise stillstehender Ausgangswelle wird eine direkte Übertragung der rotatorischen Energie des ersten Antriebsaggregates zum zweiten Antriebsaggregat oder umgekehrt, beispielsweise zum Starten eines Verbrennungsmotors, ermöglicht.

Ein leistungsverzweigter Betrieb des Getriebes (eCVT-Modus) wird durch Schließen des zweiten Schaltelements und Öffnen des ersten, dritten, vierten und fünften Schaltelements ermöglicht. Dabei wirken das erste Antriebsaggregat auf das Hohlrad des doppelten Planetengetriebes und die elektrische Maschine auf das erste Sonnenrad des doppelten Planetengetriebes, dessen Planetenträger mit der Ausgangswelle verbunden ist. Dabei lässt sich das Übersetzungsverhältnis zwischen Eingangswelle und Ausgangswelle über einen weiten Bereich mittels Vorgabe einer Drehzahl oder eines Drehmomentes des zweiten Antriebaggregates kontinuierlich variieren. Vorteilhaft wird ein leistungsverzweigter Betrieb, oder auch eCVT1-Modus genannt, ermöglicht, bei dem sowohl die Vortriebsleistung an der Ausgangswelle, als auch die Ladeleistung für den generatorischen Betrieb der elektrischen Maschine unabhängig voneinander einstellbar sind. Vorteilhaft wird ein Laden im Stand oder im Kriechen (>0km/h bis ca. 10km/h) und ein sanfter komfortabler Übergang vom Modus Standladen in den Modus Kriechladen und den Modus Fahren mit fester Übersetzung, bzw. im festem Gang ermöglicht.

Bei geschlossenem vierten oder fünften Schaltelement ist das zweite Antriebsaggregat jeweils über eine feste Übersetzung mit der Ausgangsswelle verbunden, so dass ein Antreiben der Ausgangswelle nur mittels des zweiten Antriebsaggregates bei jeweils einer festen Übersetzung erfolgt.

Es besteht auch die Möglichkeit, dass das erste Antriebsaggregat beispielsweise als elektrische Maschine ausgestaltet ist und das zweite Antriebsaggregat beispielsweise als Verbrennungskraftmaschine ausgestaltet ist. In einer solchen Konfiguration können sich mittels des Getriebes andere Funktionalitäten und Betriebsmodi für das Zusammenwirken der Komponenten ergeben, die hier nicht weiter ausgeführt werden.

In einer anderen Ausgestaltung der Erfindung erfolgt das Ändern der Übersetzungsverhältnisse des Getriebes zugkraftunterbrechungsfrei.

Ein Ändern der Übersetzungsverhältnisse des Getriebes, insbesondere ein Schalten in einen anderen Gang oder in einen anderen Betriebsmodus des Getriebes erfolgt zugkraftunterbrechungsfrei, wenn insbesondere für den Wechsel aus einem Betriebsmodus des Getriebes in einen anderen eines der Schaltelement seinen Zustand beibehält, ein zweites der Schaltelemente aus einem geschlossenen Zustand in einen geöffneten Zustand überführt wird und ein drittes der Schaltelemente aus einem geöffneten in einen geschlossenen Zustand überführt wird. Vorteilhaft wird ein Getriebe bereitgestellt, bei dem das Wechseln der Gangstufen ohne eine Unterbrechung der Zugkraft ermöglicht wird.

In einer anderen Ausgestaltung der Erfindung umfasst das Getriebe eine Ansteuerung zur Ansteuerung mindestens eines der Schaltelemente in Abhängigkeit eines vorgegebenen Betriebsvorgabesignals.

Es ist eine Ansteuerung vorgesehen welche in Abhängigkeit eines vorgegebenen Betriebsvorgabesignals, beispielsweise ein angefordertes Drehmoment, eine vorgegebene Drehzahl, oder ein bestimmter Betriebspunkt der Antriebsaggregate, mindestens eines der Schaltelemente ansteuert. Die genannten Parameter des Betriebsvorgabesignals können auf die Ausgangswelle des Getriebes, auf die Eingangswelle oder auf die mit den Antriebsaggregaten zu verbindenden Wellen bezogen sein. Vorteilhaft wird eine Steuerung des Getriebes ermöglicht.

Ferner betrifft die Erfindung eine Hybrid-Antriebsanordnung mit einem Getriebe, wobei die Hybridantriebsanordnung ein zweites Antriebsaggregat und/ oder einen Pulswechselrichter, elektrische Energiequelle oder ein erstes Antriebsaggregat umfasst.

Es wird eine Hybridantriebsanordnung mit einem bisher beschriebenen Getriebe bereitgestellt. Die Hybridantriebsanordnung umfasst ein zweites Antriebsaggregat. Insbesondere umfasst die Hybridantriebsanordnung einen Pulswechselrichter, eine elektrische Energiequelle und oder ein erstes Antriebsaggregat. Das zweite Antriebsaggregat ist insbesondere mit dem ersten Sonnenrad des doppelten Planetengetriebes gekoppelt oder verbunden. Der Pulswechselrichter ist insbesondere zur Versorgung des zweiten Antriebsaggregates, insbesondere einer elektrischen Maschine, vorgesehen. Hierzu wandelt er insbesondere die elektrische Energie einer elektrischen Energiequelle, beispielsweise einer Batterie und/ oder einer Brennstoffzelle um. Das erste Antriebsaggregat ist insbesondere mit der Eingangswelle gekoppelt oder verbunden. Vorteilhaft wird eine Hybridantriebsanordnung, welche für den Einsatz in einem Fahrzeug eingerichtet ist, bereitgestellt.

Ferner umfasst die Erfindung ein Fahrzeug mit einer beschriebenen Hybridantriebsanordnung. Vorteilhaft wird ein Fahrzeug bereitgestellt, welches eine Hybridantriebsanordnung umfasst.

Es versteht sich, dass die Merkmale, Eigenschaften und Vorteile des Getriebes entsprechend auf die Hybridantriebsanordnung, das Fahrzeug bzw. das Verfahren und umgekehrt zutreffen bzw. anwendbar sind. Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnungen

Im Folgenden soll die Erfindung anhand einiger Figuren näher erläutert werden, dazu zeigen:
- Figur 1:: eine schematische Darstellung der Hybridantriebsstranganordnung mit einem Getriebe.
- Figur 2:: eine Schaltmatrix des Getriebes.
- Figur 3:: ein schematisch dargestelltes Fahrzeug mit einer Hybridantriebstranganordnung.
- Figur 4:: ein schematisch dargestelltes nicht erfindungsgemäßes Verfahren zum Betrieb einer Hybridantriebstranganordnung.

### Ausführungsformen der Erfindung

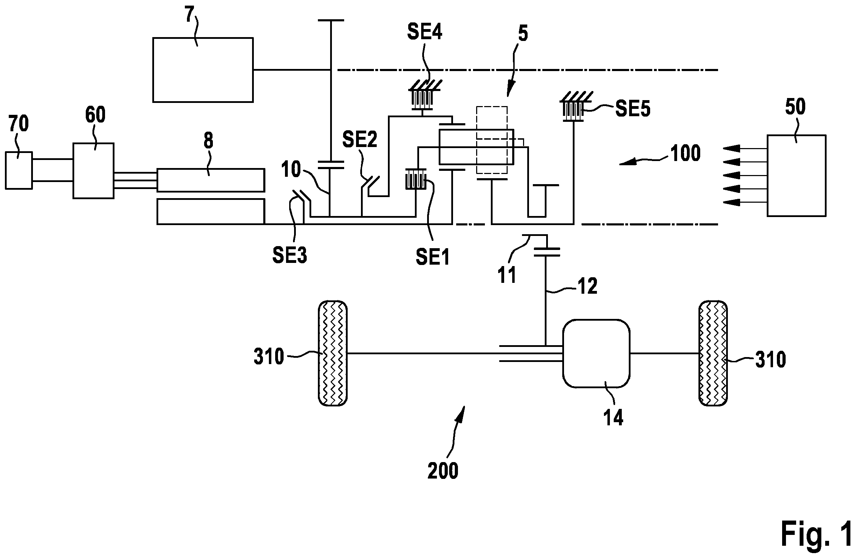

Die Figur 1 zeigt eine Hybridantriebstranganordnung 200 mit einem ersten Antriebsaggregat 7, insbesondere einem Verbrennungsmotor, und einem zweiten Antriebsaggregat 8, insbesondere einer elektrischen Maschine, und einem Getriebe 100. Insbesondere umfasst die Hybridantriebstranganordnung einen Pulswechselrichter 60 zur Versorgung des zweiten Antriebsaggregates 8 mit elektrischer Energie. Weiter umfasst die Hybridantriebstranganordnung 200 insbesondere eine elektrische Energiequelle 70, welche mit dem Pulswechselrichter 60 verbunden ist. Das Getriebe 100 umfasst die Eingangswelle 10 und die Ausgangswelle 11. Weiter umfasst das Getriebe 100 ein doppeltes Planetengetriebe 5, insbesondere ein Ravigneaux Satz, mit einem ersten und einem zweiten Sonnenrad, einem, insbesondere gemeinsamen, Planetenträger und einem Hohlrad. Insbesondere umfasst das doppelte Planetengetriebe erste Planeten, die das erste Sonnenrad umkreisen und mit dem ersten Sonnenrad und mit dem Hohlrad kämmen. Insbesondere zweite Planeten umkreisen und kämmen mit dem zweiten Sonnenrad und kämmen mit den ersten Planeten. Insbesondere fixiert der Planetenträger die Abstände der ersten und zweiten Planeten zueinander sowie jeweils untereinander. Weiter umfasst das Getriebe 100 fünf Schaltelemente SE1..SE5. Das erste Schaltelement SE1, insbesondere eine Kupplung, ist dazu eingerichtet, die Eingangswelle 10 mit dem Planetenträger des doppelten Planetengetriebes 5 zu verbinden oder zu trennen. Das zweite Schaltelement SE2, insbesondere eine Klauenkupplung, ist dazu eingerichtet, die Eingangswelle 10 mit dem Hohlrad des doppelten Planetengetriebes 5 zu verbinden oder zu trennen. Das dritte Schaltelement SE3, insbesondere eine Klauenkupplung, ist dazu eingerichtet, die Eingangswelle 10 mit dem ersten Sonnenrad des doppelten Planetengetriebes 5 zu verbinden oder zu trennen. Weiter kann das Getriebe 100 ein viertes Schaltelement SE4 aufweisen. Das vierte Schaltelement SE4 , insbesondere eine Bremse, ist dazu eingerichtet, das Hohlrad des doppelten Planetengetriebes 5 abzubremsen oder freizugeben, insbesondere in dem die Bremse das Hohlrad mit einem Fixpunkt verbindet oder beispielsweise am Gehäuse (nicht dargestellt) des Getriebes 100 abstützt. Weiter kann das Getriebe 100 ein fünftes Schaltelement SE5 umfassen. Das fünfte Schaltelement SE5, insbesondere eine Bremse, ist dazu eingerichtet, das zweite Sonnenrad des doppelten Planetengetriebes (5) abzubremsen oder freizugeben, insbesondere in dem die Bremse das zweite Sonnenrad mit einem Fixpunkt verbindet oder beispielsweise am Gehäuse (nicht dargestellt) des Getriebes 100 abstützt. Das Getriebe ist weiter dazu eingerichtet, für den Betrieb mit einem ersten Antriebsaggregat über die Eingangswelle 10 gekoppelt oder verbunden zu werden. In der Figur 1 ist dazu dargestellt, dass die Welle des Antriebsaggregates 7, insbesondere über einen Stirnradsatz, mit der Eingangswelle 10 verbunden wird. Das zweite Antriebsaggregat 8, insbesondere eine elektrische Maschine, wird für den Betrieb des Getriebes 100 wie in der Figur 1 dargestellt mit dem ersten Sonnenrad des doppelten Planetengetriebes 5 verbunden. Für eine Optimierung der Übersetzungsverhältnisse ist die Ausgangswelle 11 beispielsweise über einen Abtrieb 12, insbesondere ein Stirnradsatz, beispielsweise mit einem Differential 14 verbunden, über welches die Bewegungen auf die Räder 310 übertragen werden. Für die Ansteuerung der Schaltelemente ist eine Ansteuerung 50 vorgesehen, die das Verfahren zum Betrieb der Hybridantriebsanordnung mit dem Getriebe ausführt. Die Steuerleitungen zwischen der Ansteuerung 50 und den einzelnen Schaltelementen SE1..SE5 sind aus Übersichtlichkeitsgründen nur als Pfeil angedeutet und nicht vollständig dargestellt. Die Kommunikation zwischen den Schaltelementen SE1..SE5 und der Vorrichtung kann mittels der Steuerleitungen als auch mittels eines BUS-Systems oder kabellos erfolgen.

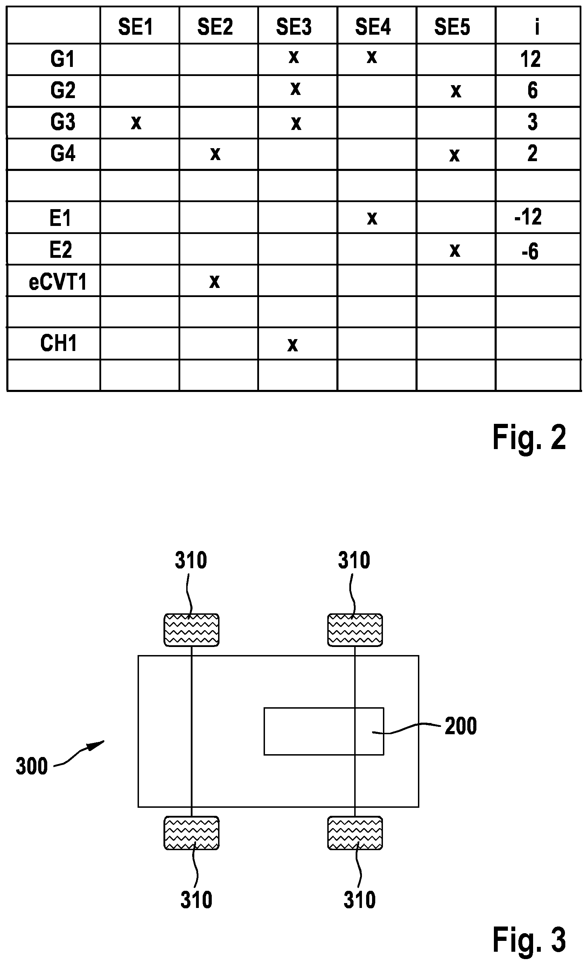

Figur 2 zeigt eine Schaltmatrix des Getriebes. In den Spalten sind die einzelnen Schaltelemente SE1..SE5 angegeben und in der letzten Spalte beispielhaft ein sich zwischen einem der Antriebsaggregate und der Ausgangswelle ergebendes ungefähres Übersetzungsverhältnis. In den Zeilen sind die unterschiedlichen Gangstufen, Gänge oder Betriebsmodi des Getriebes angegeben. Mittels Kreuzen ist in der Schaltmatrix dargestellt, welches der Schaltelemente aktiviert sein muss, damit sich der entsprechende Gang oder Betriebsmodus einstellt. Mit Aktivierung der Schaltelemente ist hierbei insbesondere gemeint, dass eine Kupplung geschlossen wird oder eine Bremse betätigt wird, sodass über die Kupplung eine Kraft von einer Welle auf eine weitere Welle übertragen wird oder mittels der Bremse eine Kraft auf einen Fixpunkt, insbesondere das Getriebegehäuse, übertragen wird. Aus der Schaltmatrix ist ersichtlich, dass sich je nach Kombination der fünf Schaltelemente vier Gänge G1.....G4 einstellen lassen, wobei der erste Gang G1 das höchste Übersetzungsverhältnis und der vierte Gang G4 das niedrigste Übersetzungsverhältnis aufweist. Bei den Gängen G1..G4 liegt bevorzugt jeweils zwischen dem erstem Antriebsaggregat 7 und der Ausgangswelle 11 ein festes Drehzahlverhältnis entsprechend der in der letzten Spalte angegebenen Übersetzung an. Die Ausgangswelle wird in den Gängen G1..G4 entweder von dem ersten Antriebsaggregat 7 alleine oder mit dem zweiten Antriebsaggregat 8 zusammen angetrieben. Insbesondere sind dies verbrennungsmotorische oder hybridische Gänge, beispielsweise wenn das erste Antriebsaggregat 7 ein Verbrennungsmotor ist und das zweite Antriebsaggregat 8 eine elektrische Maschine. Diese Gänge ermöglichen auch eine Lastpunktanhebung des Verbrennungsmotors, so dass die elektrische Maschine generatorisch betrieben werden kann und ein Laden einer Batterie während des Betriebs, insbesondere Fahrbetrieb eines Fahrzeugs, erfolgen kann. In den folgenden Zeilen der Matrix schließen sich die Gänge E1 und E2 oder Betriebsmodi an, in denen nur das zweite Antriebsaggregat 8 mit der Ausgangswelle 11 verbunden ist. Hierzu müssen insbesondere das erste, zweite, und das dritte Schaltelement SE1, SE2, S3 geöffnet sein, damit keine Verbindung zum ersten Antriebsaggregat 7 besteht. Bei geschlossenem vierten oder fünften Schaltelement ergeben sich insbesondere elektromotorische Gänge, beispielsweise wenn das zweite Antriebsaggregat eine elektrische Maschine ist. Vorteilhaft kann in diesen Gängen ein Fahrzeug lokal emissionsfrei betrieben werden. Beispielhaft ergeben sich bei Schließen des vierten Schaltelementes SE4 oder des fünften Schaltelementes SE5 die in der Schaltmatrix angegebenen Übersetzungen zwischen dem zweiten Antriebsaggregat 8 und der Abtriebswelle 11.

Mittels Schließens des zweiten Schaltelementes SE2 und Öffnen der verbleibenden Schaltelemente SE1, SE3, SE4, SE5 ergibt sich ein leistungsverzweigter Betrieb, der eCVT1-Modus, welcher eine voneinander unabhängige Vortriebsleistung an der Ausgangswelle 11 und Ladeleistung des zweiten Antriebsaggregates 8 ermöglicht. Insbesondere eignet sich dieser Betriebsmodus zum hybridischen Anfahren bei niedrigem Batterieladezustand, da ein stufenloses Verändern der Übersetzungsverhältnisse und damit insbesondere stufenloses Beschleunigen bei gleichzeitigem generatorischen Betrieb des zweiten Antriebsaggregates 8 möglich ist.

Ein weiterer Modus CH1, oder auch Standladen, genannt, ergibt sich, wenn das dritte Schaltelement SE3 geschlossen und das erste, zweite, vierte und fünfte Schaltelement SE1, SE2, SE4, SE5 geöffnet sind. Die Antriebsaggregate 7 und 8 werden dabei miteinander gekoppelt, wobei keine Verbindung zur Ausgangswelle 11 besteht. In diesem Betriebsmodus kann während des Stillstands der Ausgangswelle, insbesondere eines Fahrzeugs, mittels des ersten Antriebsaggregates 7 das zweite 8 angetrieben werden, beispielsweise generatorisch zum Laden einer elektrischen Energiequelle 70, insbesondere einer Batterie, verwendet werden. Alternativ kann mittels des zweiten Antriebsaggregates 8 auch das erste 7 angetrieben werden und beispielsweise ein Verbrennungsmotorstart oder eine Diagnose des Verbrennungsmotors durchgeführt werden, falls das erste Antriebsaggregat 7 ein Verbrennungsmotor ist und das zweite Antriebsaggregat 8 eine elektrische Maschine ist.

Figur 3 zeigt ein Fahrzeug 300 mit Rädern 310, wobei das Fahrzeug eine Hybridantriebsanordnung 200, wie oben beschrieben, umfasst.

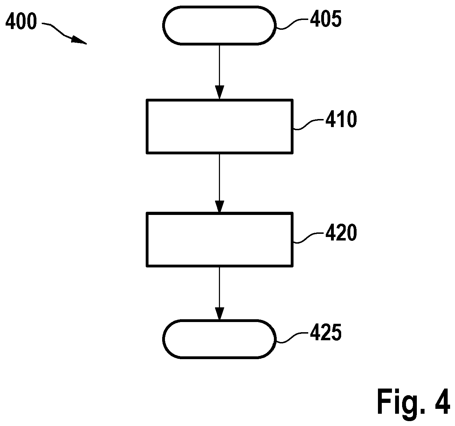

Figur 4 zeigt ein Ablaufdiagramm eines nicht erfindungsgemäßen Verfahrens 400 zum Betrieb einer Hybridantriebsanordnung 200 mit einem Getriebe 100. Mit Schritt 405 startet das Verfahren. In Schritt 410 wird ein Betriebsvorgabesignal BV ermittelt und in Schritt 420 mindestens eines der Schaltelemente SE1....SE5 zur Einstellung der Funktionalität des Getriebes 100 in Abhängigkeit des Betriebsvorgabesignals BV angesteuert. Mit Schritt 425 endet das Verfahren. Das Betriebsvorgabesignal BV ist hierbei entweder ein Parameter für eine physikalische Größe im Getriebe 100 wie z.B. ein Drehmoment oder eine Drehzahl oder eine zu übertragende Leistung, welche an einer Komponente des Getriebes 100 anliegen oder übertragen werden soll. Diese Komponenten sind insbesondere die Eingangswelle 10, die Ausgangswelle 11 aber auch die Parameter an den Antriebsaggregaten 7, 8 oder den Schaltelementen SE1..SE5. Darüber hinaus kann das Betriebsvorgabesignal BV auch einen bestimmten Betriebsmodus wie einen der vier Gänge G1.....G4 oder der zwei Gänge E1..E2, welche nur mit dem zweiten Antriebsaggregat betrieben werden, oder auch die besonderen Funktionen eCVT1, oder Standladen CH1 darstellen. In Abhängigkeit dieses Betriebsvorgabesignals BV werden die Schaltelemente SE1 bis SE5 entsprechend der Schaltmatrix angesteuert, um das Getriebe 100 in den entsprechenden Gang oder Betriebsmodus zu schalten. Für eine zugkraftunterbrechungsfreie Umschaltung zwischen den einzelnen Gängen oder Betriebsmodi ist es notwendig, dass eines der Schaltelemente SE1....SE5 seinen Zustand vor und nach der Schaltung beibehält, wobei ein weiteres Schaltelement während des Schaltens aus dem geöffneten in den geschlossenen Zustand übergeht, während ein anderes aus dem geschlossenen in den geöffneten Zustand übergeht.

## Patentansprüche

1. Getriebe (100) für eine Hybridantriebsanordnung,
welches mit zwei Antriebsaggregaten (7, 8) koppelbar ist,
mit
einer Eingangswelle (10) und einer Ausgangswelle (11),
mindestens einem ersten, zweiten und einem dritten Schaltelement (SE1, SE2, SE3),
mindestens einem doppelten Planetengetriebe (5), insbesondere Ravigneaux Satz, mit einem ersten und einem zweiten Sonnenrad, einem Planetenträger und einem Hohlrad,
wobei die Eingangswelle (10) mittels dem zweiten Schaltelement (SE2) koppelbar ist mit dem Hohlrad des doppelten Planetengetriebes (5),
und die Eingangswelle (10) mittels des dritten Schaltelementes (SE3) koppelbar ist mit dem ersten Sonnenrad des doppelten Planetengetriebes (5)
und die Ausgangswelle (11) mit dem Planetenträger des doppelten Planetengetriebes (5)gekoppelt ist, **dadurch gekennzeichnet, dass** die Eingangswelle mittels dem ersten Schaltelement koppelbar ist mit dem Planetenträger des doppelten Planetengetriebes.

2. Getriebe nach einem der vorhergehenden Ansprüche,
mit einem vierten Schaltelement (SE4), welches dazu eingerichtet ist, das Hohlrad des doppelten Planetengetriebes (5) abzubremsen oder freizugeben.

3. Getriebe nach einem der vorhergehenden Ansprüche,
mit einem fünften Schaltelement (SE5), welches dazu eingerichtet ist, das zweite Sonnenrad des doppelten Planetengetriebes (5) abzubremsen oder freizugeben.

4. Getriebe nach einem der vorhergehenden Ansprüche,
wobei das erste Schaltelement (SE1) eine Kupplung, insbesondere eine Schlupfkupplung, umfasst.

5. Getriebe nach einem der vorhergehenden Ansprüche,
wobei das zweite und/ oder das dritte Schaltelement (SE2, SE3) eine Klauenkupplung umfasst.

6. Getriebe nach einem der Ansprüche 2 bis 5,
und nach Anspruch 2, soweit das vierte Schaltelement (SE4) betroffen ist, und nach Anspruch 3, soweit das fünfte Schaltelement (SE5) betroffen ist, wobei das vierte und/ oder das fünfte Schaltelement (SE4, SE5) eine Bremse umfasst.

7. Getriebe nach einem der vorhergehenden Ansprüche,
wobei ein erstes Antriebsaggregat (7), insbesondere eine Verbrennungskraftmaschine, mit der Eingangswelle (10) koppelbar ist und/ oder ein zweites Antriebsaggregat (8), insbesondere eine elektrische Maschine, mit dem ersten Sonnenrad des doppelten Planetengetriebes (5) koppelbar ist.

8. Getriebe nach einem der vorhergehenden Ansprüche,
wobei ein Ändern der Übersetzungsverhältnisse des Getriebes (100) zugkraftunterbrechungsfrei erfolgt.

9. Getriebe nach einem der vorhergehenden Ansprüche,
mit einer Ansteuerung (50) zur Ansteuerung mindestens eines der Schaltelemente (SE1..SE5) in Abhängigkeit eines vorgegebenen Betriebsvorgabesignals (BV).

10. Hybridantriebsanordnung (200) mit einem Getriebe (100) nach einem der Ansprüche 1 bis 9, wobei die Hybridantriebsanordnung ein zweites Antriebsaggregat (8) und/ oder einen Pulswechselrichter (60), eine elektrische Energiequelle (70) oder ein erstes Antriebsaggregat (7) umfasst.

11. Fahrzeug (300) mit einer Hybridantriebsanordnung (200) nach Anspruch 10.

## Claims

1. Transmission (100) for a hybrid drive arrangement, which can be coupled to two drive units (7, 8), comprising
an input shaft (10) and an output shaft (11),
at least a first, second and a third switching element (SE1, SE2, SE3),
at least one double planetary transmission (5), in particular a Ravigneaux set, having a first and a second sun gear, a planet carrier and an internal gear,
wherein the input shaft (10) can be coupled to the internal gear of the double planetary transmission (5) by means of the second switching element (SE2),
and the input shaft (10) can be coupled to the first sun gear of the double planetary transmission (5) by means of the third switching element (SE3),
and the output shaft (11) is coupled to the planet carrier of the double planetary transmission (5), **characterized in that** the input shaft can be coupled to the planet carrier of the double planetary transmission by means of the first switching element.

2. Transmission according to one of the preceding claims,
having a fourth switching element (SE4), which is configured to brake or release the internal gear of the double planetary transmission (5).

3. Transmission according to one of the preceding claims,
having a fifth switching element (SE5), which is configured to brake or release the second sun gear of the double planetary transmission (5).

4. Transmission according to one of the preceding claims,
wherein the first switching element (SE1) comprises a clutch, in particular a slipping clutch.

5. Transmission according to one of the preceding claims,
wherein the second and/or the third switching element (SE2, SE3) comprises a dog clutch.

6. Transmission according to one of Claims 2 to 5, and according to Claim 2, if the fourth switching element (SE4) is involved,
and according to Claim 3, if the fifth switching element (SE5) is involved,
wherein the fourth and/or the fifth switching element (SE4, SE5) comprises a brake.

7. Transmission according to one of the preceding claims,
wherein a first drive unit (7), in particular an internal combustion engine, can be coupled to the input shaft (10), and/or a second drive unit (8), in particular an electric machine, can be coupled to the first sun gear of the double planetary transmission (5).

8. Transmission according to one of the preceding claims,
wherein a change in the transmission ratios of the transmission (100) is carried out without interrupting the tractive force.

9. Transmission according to one of the preceding claims,
having an actuator (50) for actuating at least one of the switching elements (SE1..SE5) depending on a predefined operating specification signal (BV).

10. Hybrid drive arrangement (200) having a transmission (100) according to one of Claims 1 to 9, wherein the hybrid drive arrangement comprises a second drive unit (8) and/or a pulse-width-modulated converter (60), an electric energy source (70) or a first drive unit (7).

11. Vehicle (300) having a hybrid drive arrangement (200) according to Claim 10.

## Revendications

1. Transmission (100) pour un agencement d'entraînement hybride,
qui peut être accouplée à deux organes d'entraînement (7, 8),
avec
un arbre d'entrée (10) et un arbre de sortie (11),
au moins un premier, un deuxième et un troisième élément de commutation (SE1, SE2, SE3),
au moins un engrenage planétaire double (5), notamment un train de Ravigneaux, avec un premier et un deuxième planétaire, un porte-satellites et une couronne,
l'arbre d'entrée (10) pouvant être accouplé au moyen du deuxième élément de commutation (SE2) à la couronne de l'engrenage planétaire double (5),
et l'arbre d'entrée (10) pouvant être accouplé au moyen du troisième élément de commutation (SE3) au premier planétaire de l'engrenage planétaire double (5),
et l'arbre de sortie (11) étant accouplé au porte-satellites de l'engrenage planétaire double (5), **caractérisée en ce que** l'arbre d'entrée peut être accouplé au moyen du premier élément de commutation au porte-satellites de l'engrenage planétaire double.

2. Transmission selon l'une quelconque des revendications précédentes,
avec un quatrième élément de commutation (SE4) qui est conçu pour freiner ou libérer la couronne de l'engrenage planétaire double (5).

3. Transmission selon l'une quelconque des revendications précédentes,
avec un cinquième élément de commutation (SE5) qui est conçu pour freiner ou libérer le deuxième planétaire de l'engrenage planétaire double (5).

4. Transmission selon l'une quelconque des revendications précédentes,
dans laquelle le premier élément de commutation (SE1) comprend un embrayage, notamment un embrayage à glissement.

5. Transmission selon l'une quelconque des revendications précédentes,
dans laquelle le deuxième et/ou le troisième élément de commutation (SE2, SE3) comprennent un embrayage à crabots.

6. Transmission selon l'une quelconque des revendications 2 à 5,
et selon la revendication 2, dans la mesure où le quatrième élément de commutation (SE4) est concerné,
et selon la revendication 3, dans la mesure où le cinquième élément de commutation (SE5) est concerné, dans laquelle le quatrième et/ou le cinquième élément de changement de vitesse (SE4, SE5) comprennent un frein.

7. Transmission selon l'une quelconque des revendications précédentes,
dans laquelle un premier organe d'entraînement (7), notamment une machine à combustion interne, peut être accouplé à l'arbre d'entrée (10) et/ou un deuxième organe d'entraînement (8), notamment une machine électrique, peut être accouplé au premier planétaire de l'engrenage planétaire double (5).

8. Transmission selon l'une quelconque des revendications précédentes,
dans laquelle une modification des rapports de transmission de la transmission (100) s'effectue sans interruption de la force de traction.

9. Transmission selon l'une quelconque des revendications précédentes,
avec une commande (50) pour la commande d'au moins l'un des éléments de commutation (SE1...SE5) en fonction d'un signal de consigne de fonctionnement (BV) prédéfini.

10. Agencement d'entraînement hybride (200) avec une transmission (100) selon l'une quelconque des revendications 1 à 9, l'agencement d'entraînement hybride comprenant un deuxième organe d'entraînement (8) et/ou un onduleur à impulsions (60), une source d'énergie électrique (70) ou un premier organe d'entraînement (7).

11. Véhicule (300) avec un agencement d'entraînement hybride (200) selon la revendication 10.
